# EUROPÄISCHE PATENTSCHRIFT

(11) **EP 2 370 230 B1**
(45) Veröffentlichungstag und Bekanntmachung des Hinweises auf die Patenterteilung: **17.07.2013**
(21) Anmeldenummer: 10701825.1
(22) Anmeldetag: 28.01.2010
(51) Int. Cl.: B23Q 1/54

(54) **BEARBEITUNGSZENTRUM**
MACHINING CENTER
CENTRE D'USINAGE

(30) Priorität: 06.02.2009 DE 202009001524 U; 23.02.2009 DE 202009002504 U
(43) Veröffentlichungstag der Anmeldung: 05.10.2011
(73) Patentinhaber: Hedelius Maschinenfabrik GmbH, 49716 Meppen (DE)
(72) Erfinder: HEMPELMANN, Jürgen, 49716 Meppen (DE)
(74) Vertreter: Von Rohr
(86) Internationale Anmeldenummer: PCT/EP2010/000506
(87) Internationale Veröffentlichungsnummer: WO 2010/089051

(56) Entgegenhaltungen:
- EP-A1- 1 647 355
- WO-A1-2006/072356
- DE-A1- 19 908 409
- DE-U1-202006 009 653
- US-A1- 2006 270 540
- US-A1- 2007 251 071

## Beschreibung

Die Erfindung betrifft ein Bearbeitungszentrum mit den Merkmalen des Oberbegriffs von Anspruch 1.

Bearbeitungszentren der in Rede stehenden Art dienen im Maschinen- und Anlagenbau der Bearbeitung komplizierter Werkstücke an fünf oder sechs Flächen mittels dreiachsiger oder fünfachsiger Bearbeitungen. Dabei dient sowohl zur dreiachsigen als auch zur fünfachsigen Bearbeitung ein Fahrständer mit mindestens einem Bearbeitungskopf. Der Fahrständer ist zumeist nach Art eines X-Y-Z-Schlittens aufgebaut. Er kann mit diversen zusätzlichen Bearbeitungsköpfen komplettiert werden. Beispielsweise kann ein Winkelfräskopf am Fahrständer zur horizontalen Bearbeitung des mittels einer Werkstückaufspannvorrichtung fest aufgespannten Werkstückes dienen.

Zweckmäßig ist es, wenn der Fahrständer mindestens ein mitfahrendes Werkzeugmagazin aufweist. Dieses sollte zweckmäßigerweise von der Rückseite des Bearbeitungszentrums aus bestückbar sein. Im einzelnen ist dieser Stand der Technik bekannt (DE-U-20 2006 009 653).

Von einer dreiachsigen Bearbeitung gelangt man zu einer fünfachsigen Bearbeitung des Werkstückes, wenn die Werkstückaufspannvorrichtung mit einer Dreh-Schwenktischeinheit ausgerüstet ist. Bei dieser befindet sich eine um eine horizontale Achse ortsfest am Maschinengrundträger schwenkbar gelagerte Schwenkbrücke im Arbeitsraum innerhalb der Schutzverkleidung. Auf dieser Schwenkbrücke befindet sich wiederum ein um 360°, zumindest um 180° drehbarer Drehtisch, auf dem das Werkstück aufgespannt werden kann. Somit läßt sich das Werkstück um seine Hochachse komplett drehen und im Raum im Regelfall um +/- 90° schwenken. Zusammen mit der Dreiachsenführung des Bearbeitungskopfes am Fahrständer ergibt sich die insgesamt fünfachsige Bearbeitungsmöglichkeit für das Werkstück.

Will man ein Werkstück an allen sechs Seiten bearbeiten, so muß man dieses zunächst an der sechsten Seite, beispielsweise einer Fußplatte des Werkstücks, vollständig bearbeiten. Dazu dient regelmäßig eine Festtischeinheit, die sich häufig unmittelbar benachbart zur Dreh-Schwenktischeinheit im Arbeitsraum des Bearbeitungszentrums befindet. Bei dem Stand der Technik, von dem die Erfindung ausgeht (DE-U-20 2006 009 653) befindet sich diese Festtischeinheit in Y-Richtung gesehen neben der Dreh-Schwenktischeinheit.

Ist das Werkstück an der sechsten Seite vollständig bearbeitet, so wird es auf die Aufspannfläche der Dreh-Schwenktischeinheit umgespannt. Die sechste Seite des Werkstückes ist jetzt dessen Boden und wird nicht mehr bearbeitet. Die anderen fünf Seiten können mit der fünfachsigen Einheit bearbeitet werden. Der bereits fertigbearbeitete Boden des Werkstücks dient dabei als Referenzebene für die lasergesteuerte Führung des Bearbeitungskopfes zur folgenden Bearbeitung des Werkstückes an den anderen Seiten.

Bei dem bekannten Bearbeitungszentrum ist die Dreh-Schwenktischeinheit wannenartig ausgeführt mit zwei tragenden Schwenkgelenken, zwischen denen abgesenkt der Drehtisch auf der Schwenkbrücke angeordnet ist. Diese Anordnung der Dreh-Schwenktischeinheit mit ihrer Schwenkachse in X-Richtung hat den großen Vorteil, daß der Bearbeitungskopf das auf der fünfachsigen Einheit aufgespannte Werkstück in Y-Richtung frei anfahren kann.

Nachteilig ist bei der bekannten Konstruktion, daß der Bearbeitungskopf in X-Richtung einen eingeschränkten Aktionsradius hat und daß ein auf der Festtischeinheit aufgespanntes Werkstück beim Umspannen auf die Dreh-Schwenktischeinheit über das voluminöse tragende Schwenkgelenk zwischen Festtischeinheit und Dreh-Schwenktischeinheit hinübergehoben werden muß.

Bekannt sind auch Bearbeitungszentren, bei denen eine Werkstückaufspannvorrichtung in Form einer Dreh-Schwenktischeinheit vorgesehen ist, die mit ihrer Schwenkachse in Y-Richtung ausgerichtet ist und nur einseitig ein den Drehtisch tragendes Schwenkgelenk aufweist (US 2007/0251071 A1; US 2006/0270540 A1). Für sich ist es also bekannt, dass man eine Dreh-Schwenktischeinheit eines Bearbeitungszentrums mit nur einem einseitigen Schwenkgelenk ausrüsten kann. Damit ist der Drehtisch der Dreh-Schwenktischeinheit von der Beschickungsöffnung an der Längsseite der Schutzverkleidung her frei zugänglich und kann beladen und entladen werden. Nachteilig bei dieser Anordnung ist, dass der Bearbeitungskopf das aufgespannte Werkstück nicht in Y-Richtung frei anfahren kann. Er muss in einer Art Brückenkonstruktion über das voluminöse tragende Schwenkgelenk hinüber gefahren werden.

Der Lehre liegt daher das Problem zugrunde, das bekannte, eingangs erläuterte Bearbeitungszentrum hinsichtlich der Bearbeitung von Werkstücken weiter zu optimieren.

Das zuvor aufgezeigte Problem ist bei einem Bearbeitungszentrum mit den Merkmalen des Oberbegriffs von Anspruch 1 durch die Merkmale des kennzeichnenden Teils von Anspruch 1 gelöst. Vorteilhafte Ausgestaltungen und Weiterbildungen sind Gegenstand der Unteransprüche.

Erfindungsgemäß wird die Dreh-Schwenktischeinheit nur einseitig in einem tragenden Schwenkgelenk gelagert. Damit ist die andere, in X-Richtung gegenüberliegende Seite der Dreh-Schwenktischeinheit frei, der Drehtisch ist von dort bis hinunter auf seine Aufspannfläche zugänglich. Der Aktionsradius des Bearbeitungskopfes des Fahrständers ist von hier aus auch in X-Richtung nicht eingeschränkt. Ein Werkstück kann mehr oder weniger frei zwischen Festtischeinheit und Dreh-Schwenktischeinheit hin und her bewegt werden. Dazu ist bevorzugterweise vorgesehen, daß die Aufspannfläche des Drehtisches der Dreh-Schwenkeinheit in horizontaler Stellung und die Aufspannfläche der Festtischeinheit im wesentlichen in einer Ebene liegen.

Für eine noch höhere Stabilität der Dreh-Schwenktischeinheit bei gleichwohl gegebener Optimierung der Zugänglichkeit des Werkstückes kann es sich empfehlen, daß die Dreh-Schwenktischeinheit dem tragenden Schwenkgelenk gegenüber in einem kleinen Stützlager schwenkbar abgestützt ist. Das kleine Stützlager dient nur der zusätzlichen Abstützung auf der vom eigentlich tragenden Schwenkgelenk abgewandten Seite des Drehtisches. Lediglich bei besonders hohen Kräften am Drehtisch ist dies kleine zusätzliche Stützlager in Funktion. Es trägt hier kaum auf, insbesondere dann nicht, wenn das Stützlager in Z-Richtung nicht oder nur geringfügig über die Aufspannfläche der Festtischeinheit hinausragt.

Im folgenden wird die Erfindung anhand einer lediglich ein bevorzugtes Ausführungsbeispiel darstellenden Zeichnung näher erläutert. In der Zeichnung zeigt
- Fig. 1: ein erfindungsgemäßen Bearbeitungszentrum mit geöffneter Schutztür in einer Ansicht in Y-Richtung von der Beschickungsöffnung her,
- Fig. 2: das Bearbeitungszentrum aus Fig. 1 in einer Schnittansicht von links in Fig. 1 und
- Fig. 3: das Bearbeitungszentrum aus Fig. 1 in einer Draufsicht, den Fahrständer teilweise weggeschnitten.

Gegenstand der Erfindung ist ein Bearbeitungszentrum wie es seit längerem aus der Praxis bekannt ist. Dieses weist zunächst einen Maschinengrundträger 1 auf, an dem eine umlaufende Schutzverkleidung 2 angebracht ist. Der Maschinengrundträger 1 definiert mit seiner horizontalen Längsausrichtung eine X-Achse bzw. X-Richtung, mit seiner horizontalen Querausrichtung eine Y-Achse bzw. Y-Richtung und mit seiner vertikalen Ausrichtung eine Z-Achse bzw. Z-Richtung. Darauf wird im folgenden immer wieder Bezug genommen.

Im dargestellten Ausführungsbeispiel ist die Schutzverkleidung 2 umlaufend, nach oben allerdings offen. Das entspricht üblicher Ausrüstung entsprechender Bearbeitungszentren. Die Abwärme des Bearbeitungszentrums kann so nach oben ohne weiteres entweichen. Es gibt aber auch Bearbeitungszentren, bei denen die Schutzverkleidung 2 nach oben geschlossen ist. Insbesondere sind dies Bearbeitungszentren mit einer Klimatisierung. Die Schutzverkleidung 2 dient dazu, die Umgebung des Bearbeitungszentrums sauber zu halten.

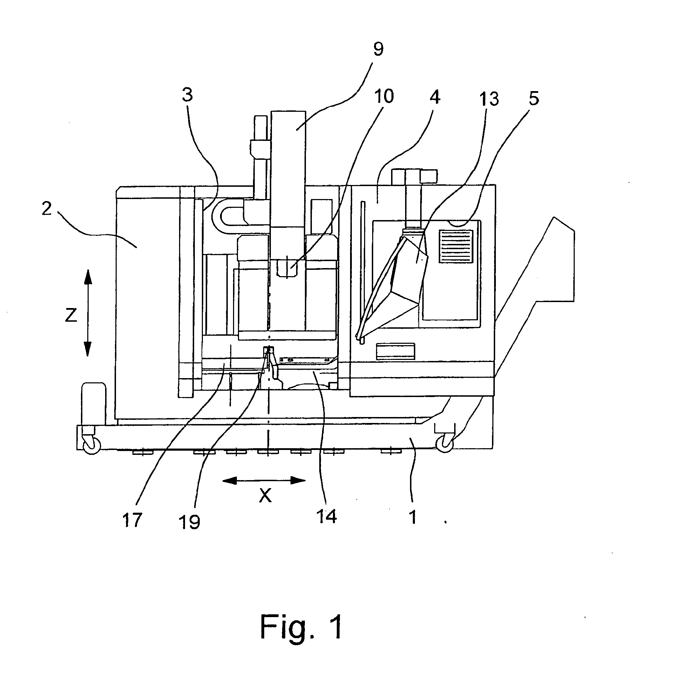

Damit man Werkstücke in das Bearbeitungszentrum einbringen und wieder daraus entnehmen kann, hat die umlaufende Schutzverkleidung 2 eine breite Beschickungsöffnung 3 an einer Längsseite des Maschinengrundträgers 1. Die Beschickungsöffnung 3 wird durch eine an der Schutzverkleidung 2 und/oder am Maschinengrundträger 1 gelagerte Schutztür 4 verschlossen. In Fig. 1 erkennt man die Schutztür 4 von der Beschickungsöffnung 3 nach rechts weggefahren, die Beschickungsöffnung 3 ist also geöffnet.

Wie bereits im Stand der Technik, von dem die Erfindung ausgeht, erläutert worden ist, kann die Schutztür 4 manuell geöffnet und geschlossen werden. Dafür sind aber auch motorische Antriebe bekannt. Regelmäßig weist die Schutztür 4 ein großes Beobachtungsfenster 5 auf. Die Schutztür 4 kann auch in Form von zwei vorzugsweise gegenläufig beweglichen Teil-Schutztüren realisiert sein.

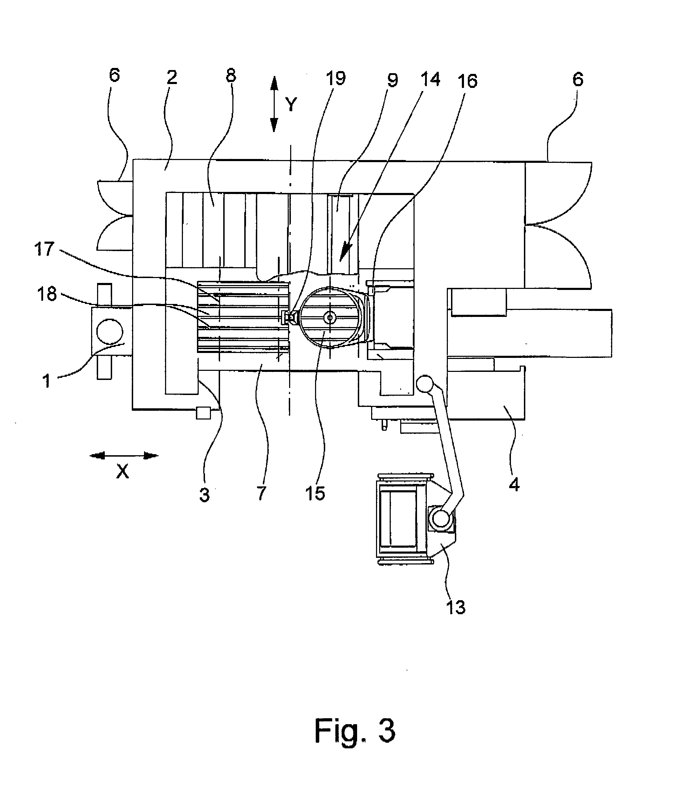

Innerhalb der Schutzverkleidung 2 befindet sich ein großer Arbeitsraum. Dieser kann durch zusätzliche Türen 6 an verschiedenen Stellen noch separat zugänglich sein, darauf kommt es im vorliegenden Fall aber nicht an. Wesentlich ist, daß im Arbeitsraum nahe der Beschickungsöffnung 3 ein sich in Längsrichtung des Arbeitsraums erstreckender Werkstückpositionierbereich 7 und von der Beschickungsöffnung 3 aus gesehen hinter dem Werkstückpositionierbereich 7 eine sich parallel zum Werkstückpositionierbereich 7 ersteckende Verfahrführung 8 vorgesehen ist. Der Werkstückpositionierbereich 7 ist also logischerweise nahe der Beschickungsöffnung 3, in Fig. 1 also vorne angeordnet, dahinter befindet sich die Verfahrführung 8, die in Fig. 3 nur angedeutet ist.

Die Verfahrführung 8 dient dem Verfahren eines Fahrständers 9, der im wesentlichen über die volle Länge des Arbeitsraums innerhalb der Schutzverkleidung 2 verfahrbar ist. Dieser trägt mindestens einen Bearbeitungskopf 10, mit dem dann mittels eines entsprechenden Bearbeitungswerkzeugs die Bearbeitung eines Werkstücks erfolgen kann. Werkstücke sind in der Zeichnung nicht dargestellt.

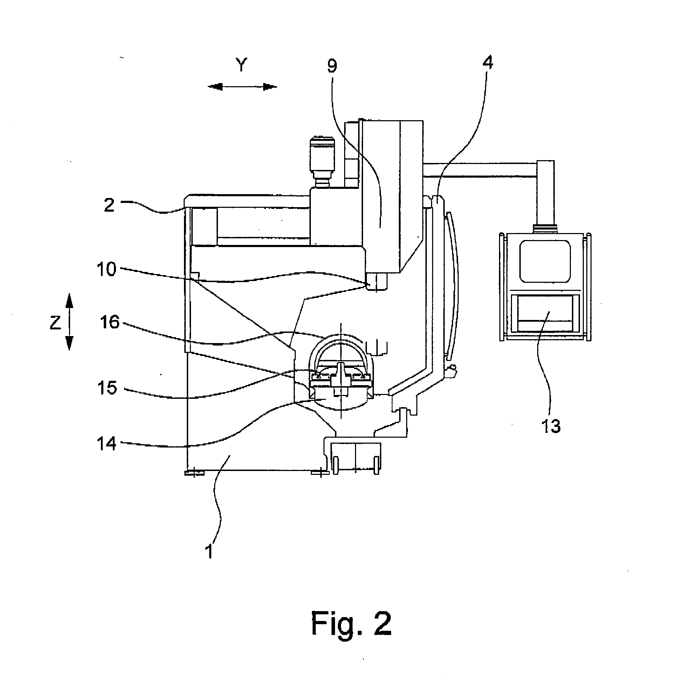

In den Fig. 1 bis 3 erkennt man im übrigen noch ein übliches CNC-Steuerpult 13 für das Bearbeitungszentrum. Im übrigen empfiehlt es sich, daß der Fahrständer 9 ein mitfahrendes Werkzeugmagazin aufweist, so daß die nötigen Werkzeuge für den Bearbeitungskopf 10 immer am Platz verfügbar sind. Das CNC-Steuerpult 13 ist hier hängend an einem schwenkbaren Ausleger angeordnet und in Fig. 2 um 180° geschwenkt gegenüber Fig. 1 und Fig. 3 dargestellt.

Man erkennt in Fig. 2 im übrigen den Bearbeitungskopf 10 im Werkstückpositionierbereich 7 in dicken Linien und abgesenkt hinunter zur Werkstückaufspannvorrichtung in dünnen Linien.

Der Bearbeitungskopf 10 selbst ist zunächst in X-Richtung mit dem Fahrständer 9 verfahrbar. Seinerseits ist er gegenüber dem Fahrständer 9 im übrigen zumindest in Y-Richtung und in Z-Richtung verfahrbar. Zumindest deshalb, weil er im übrigen auch noch kippbar, neigbar und/oder drehbar sein kann, je nach den Anforderungen der fünfachsigen Bearbeitungseinheit.

Fig. 1 bis 3 zeigen im Zusammenhang, daß im Werkstückpositionierbereich 7 zunächst eine Werkstückaufspannvorrichtung in Form einer Dreh-Schwenktischeinheit 14 angeordnet ist. Die Dreh-Schwenktischeinheit 14 sieht man in Fig. 1 und 3 in dem rechten Teil des Werkstückpositionierbereichs 7. In Fig. 2 ist der Schnitt so gelegt, daß man gerade auf diese Dreh-Schwenktischeinheit 14 sieht.

Die Dreh-Schwenktischeinheit 14 ist in dieser Konstruktion mit ihrer Schwenkachse in X-Richtung ausgerichtet. Die Besonderheit der erfindungsgemäßen Konstruktion ist nun die, daß die Dreh-Schwenktischeinheit 14 trotz der Ausrichtung in ihrer Schwenkachse in X-Richtung nur einseitig ein den Drehtisch 15 tragendes Schwenkgelenk 16 aufweist. In Fig. 2 sieht man auf dieses Schwenkgelenk 16, das massiv und groß bauend ausgeführt ist. Es muß hohe Kräfte aufzunehmen in der Lage sein. Außerdem beinhaltet dieses Schwenkgelenk 16 den Schwenkantrieb der Dreh-Schwenktischeinheit 14.

Der Drehtisch 15, der vom Schwenkgelenk 16 getragen wird, umfaßt eine lagernde Schwenkbrücke.

Fig. 1 zeigt, daß auf die dargestellte Weise ein auf dem Drehtisch 15 der Dreh-Schwenktischeinheit 14 aufgespanntes Werkstück auch in X-Richtung von links praktisch hinunter bis auf die Aufspannfläche des Drehtisches 15 bearbeitet werden kann. Die freie Zugänglichkeit des Drehtisches 15 von links auch in X-Richtung zeigt auch Fig. 3 sehr gut.

Fig. 1 und 3 zeigen im Zusammenhang ferner, daß im Werkstoffpositionierbereich 7 in Y-Richtung gesehen neben der Dreh-Schwenktischeinheit 14 eine Werkstückaufspannvorrichtung in Form einer Festtischeinheit 17 angeordnet ist. Dabei ist hier vorgesehen, daß die Festtischeinheit 17 auf ihrer Aufspannfläche in X-Richtung verlaufende Nuten 18 aufweist, in denen Spannvorrichtungen für ein Werkstück beliebig verschiebbar sind.

Die Festtischeinheit 17 erlaubt die oben bereits erläuterte Vorbearbeitung der sechsten Seite eines Werkstückes, die dann auf der fünfachsigen Dreh-Schwenktischeinheit 14 zur auf der Aufspannfläche befindlichen, verdeckten Seite wird.

Fig. 1 zeigt, daß hier und nach bevorzugter Lehre vorgesehen ist, daß die Aufspannfläche des Drehtisches 15 der Dreh-Schwenkeinheit 14 in horizontaler Stellung und die Aufspannfläche der Festtischeinheit 17 im wesentlichen in einer Ebene liegen. Eine solche Lage der Aufspannflächen der beiden Werkstückaufspannvorrichtungen hat zwei Vorzüge. Zum einen muß das Werkstück beim Umspannen nicht wesentlich angehoben werden. Natürlich muß es gedreht werden, aber es muß nicht über ein massives tragendes Schwenkgelenk zwischen Festtischeinheit 17 und Dreh-Schwenktischeinheit 14 hinüber gewuchtet werden.

Außerdem ist es möglich, sehr große Werkstücke gleichzeitig auf der Festtischeinheit 17 und dem dann als Festtisch funktionierenden Drehtisch 15 der Dreh-Schwenktischeinheit 14 zu positionieren.

Letzteres wird im dargestellten Ausführungsbeispiel allerdings durch die bevorzugte Konstruktion wieder ein wenig konterkariert. Es ist nämlich hier vorgesehen, daß die Dreh-Schwenktischeinheit 14 dem tragenden Schwenkgelenk 16 gegenüber in einem kleinen Stützlager 19 schwenkbar abgestützt ist. Dabei ist hier vorgesehen, daß das kleine Stützlager 19 der Dreh-Schwenktischeinheit 14 am der Dreh-Schwenktischeinheit 14 zugewandten Rand der Festtischeinheit 17 angeordnet ist.

Im dargestellten, insbesondere in Fig. 1 gut erkennbaren Ausführungsbeispiel ragt das Stützlager 19 nur ein wenig über die Aufspannfläche der Festtischeinheit 17 nach oben hinaus. Dieses Stützlager 19 ist nur ein zusätzliches Lager, das bei besonders hohen Kräften auf die Dreh-Schwenktischeinheit 14 eine Abstützung bewirkt. Es ist, wie bereits erwähnt, nicht unter allen Umständen notwendig.

Auch bei der erfindungsgemäßen Konstruktion ist ein mit dem Fahrständer 9 mitfahrendes Werkzeugmagazin von besonderem Vorteil.

## Patentansprüche

1. Bearbeitungszentrum
mit einem Maschinengrundträger (1), dessen horizontale Längsausrichtung eine X-Achse (X-Richtung) definiert, dessen horizontale Querausrichtung eine Y-Achse (Y-Richtung) definiert und dessen vertikale Ausrichtung eine Z-Achse (Z-Richtung) definiert,
mit einer am Maschinengrundträger (1) angebrachten Schutzverkleidung (2) mit mindestens einer Beschickungsöffnung (3) an einer Längsseite,
wobei innerhalb der Schutzverkleidung (2) ein Arbeitsraum gebildet ist,
wobei im Arbeitsraum nahe der Beschickungsöffnung (3) ein sich in X-Richtung erstreckender Werkstückpositionierbereich (7) und von der Beschickungsöffnung (3) aus gesehen hinter dem Werkstückpositionierbereich (7) eine sich parallel zum Werkstückpositionierbereich (7) erstreckende Verfahrführung (8) vorgesehen ist,
wobei ein auf der Verfahrführung (8) in X-Richtung verfahrbarer Fahrständer (9) mit mindestens einem Bearbeitungskopf (10) vorgesehen ist,
wobei im Werkstückpositionierbereich (7) eine Werkstückaufspannvorrichtung in Form einer Dreh-Schwenktischeinheit (14) und in Y-Richtung gesehen neben der Dreh-Schwenktischeinheit (14) eine Werkstückaufspannvorrichtung in Form einer Festtischeinheit (17) angeordnet ist,
wobei die Dreh-Schwenktischeinheit (14) mit ihrer Schwenkachse in X-Richtung ausgerichtet ist und einen Drehtisch (15) und ein den Drehtisch (15) tragendes Schwenkgelenk aufweist, und
wobei mittels des mit einem Werkzeug bestückten Bearbeitungskopfes (10) des Fahrständers (9) an einem im Werkstückpositionierbereich (7) aufgespannten Werkstück eine Bearbeitung vornehmbar ist,
**dadurch gekennzeichnet,**
**dass** die Dreh-Schwenktischeinheit (14) nur ein den Drehtisch (15) tragendes Schwenkgelenk (16) aufweist, wobei dieses Schwenkgelenk (16) an der der Festtischeinheit (17) abgewandten Seite angeordnet ist und
**dass** die Aufspannfläche des Drehtisches (15) der Dreh-Schwenktischeinheit (14) in horizontaler Stellung des Drehtisches (15) und die Aufspannfläche der Festtischeinheit (17) im Wesentlichen in einer Ebene liegen.

2. Bearbeitungszentrum nach Anspruch 1, **dadurch gekennzeichnet,**
**daß** die Festtischeinheit (17) auf ihrer Aufspannfläche in X-Richtung verlaufende Nuten (18) aufweist, in denen Spannvorrichtungen für ein Werkstück verschiebbar sind.

3. Bearbeitungszentrum nach Anspruch 1 oder 2, **dadurch gekennzeichnet,**
**dass** die Dreh-Schwenktischeinheit (14) dem tragenden Schwenkgelenk (16) gegenüber in einem kleinen Stützlager (19) schwenkbar abgestützt ist, das in Z-Richtung nicht oder nur geringfügig über die Aufspannfläche der Festtischeinheit (17) hinausragt.

4. Bearbeitungszentrum nach Anspruch 3, **dadurch gekennzeichnet,**
**dass** das kleine Stützlager (19) der Dreh-Schwenktischeinheit (14) am der Dreh-Schwenktischeinheit (14) zugewandten Rand der Festtischeinheit (17) angeordnet ist.

5. Bearbeitungszentrum nach einem der Ansprüche 1 bis 4, **dadurch gekennzeichnet,**
**dass** der Fahrständer (9) ein mitfahrendes Werkzeugmagazin für den Bearbeitungskopf (10) aufweist.

## Claims

1. Machining centre
having a main machine carrier (1), the horizontal longitudinal orientation of which defines an X axis (X direction), the horizontal transverse orientation of which defines a Y axis (Y direction) and the vertical orientation of which defines a Z axis (Z direction), having a protective casing (2) which is fitted on the main machine carrier (1) and has at least one feeding opening (3) on one longitudinal side,
wherein a working space is formed within the protective casing (2),
wherein a workpiece positioning region (7) that extends in the X direction is provided in the working space close to the feeding opening (3) and a displacement guide (8) that extends parallel to the workpiece positioning region (7) is provided behind the workpiece positioning region (7) as seen from the feeding opening (3),
wherein a travelling column (9) which is displaceable in the X direction on the displacement guide (8) and has at least one machining head (10) is provided, wherein a workpiece clamping device in the form of a rotary/tilting table unit (14) is arranged in the workpiece positioning region (7) and a workpiece clamping device in the form of a fixed table unit (17) is arranged next to the rotary/tilting table unit (14) as seen in the Y direction,
wherein the pivot axis of the rotary/tilting table unit (14) is oriented in the X direction and the rotary/tilting table unit (14) has a rotary table (15) and a pivot joint supporting the rotary table (15), and wherein machining can be carried out, by means of the machining head (10), equipped with a tool, of the travelling column (9), on a workpiece clamped in the workpiece positioning region (7),
**characterized**
**in that** the rotary/tilting table unit (14) has only one pivot joint (16) supporting the rotary table (15), wherein this pivot joint (16) is arranged on the side facing away from the fixed table unit (17), and
**in that** the clamping surface of the rotary table (15) of the rotary/tilting table unit (14), with the rotary table (15) in the horizontal position, and the clamping surface of the fixed table unit (17) lie substantially in one plane.

2. Machining centre according to Claim 1, **characterized**
**in that** the fixed table unit (17) has grooves (18) which extend in the X direction on its clamping surface, clamping devices for a workpiece being movable in said grooves (18).

3. Machining centre according to Claim 1 or 2, **characterized**
**in that** the rotary/tilting table unit (14) is supported in a pivotable manner opposite the supporting pivot joint (16) in a small support bearing (19) which projects only a little, if at all, in the Z direction beyond the clamping surface of the fixed table unit (17).

4. Machining centre according to Claim 3, **characterized**
**in that** the small support bearing (19) of the rotary/tilting table unit (14) is arranged on that edge of the fixed table unit (17) that faces the rotary/tilting table unit (14).

5. Machining centre according to one of Claims 1 to 4, **characterized**
**in that** the travelling column (9) has an accompanying tool magazine for the machining head (10).

## Revendications

1. Centre d'usinage
comprenant un support de base de machine (1), dont l'orientation longitudinale horizontale définit un axe X (direction X), dont l'orientation transversale horizontale définit un axe Y (direction Y) et dont l'orientation verticale définit un axe Z (direction Z),
comprenant un habillage de protection (2) monté sur le support de base de machine (1) avec au moins une ouverture de chargement (3) au niveau d'un côté longitudinal,
un espace de travail étant formé à l'intérieur de l'habillage de protection (2),
une région de positionnement de pièce (7) s'étendant dans la direction X étant prévue dans l'espace de travail à proximité de l'ouverture de chargement (3) et, vu depuis l'ouverture de chargement (3), derrière la région de positionnement de pièce (7), étant prévu un guide de déplacement (8) s'étendant parallèlement à la région de positionnement de pièce (7),
un chariot mobile (9) déplaçable dans la direction X sur le guide de déplacement (8) étant pourvu d'au moins une tête d'usinage (10),
un dispositif de serrage de pièce en forme d'unité à table pivotante rotative (14) étant disposé dans la région de positionnement de pièce (7) et, vu dans la direction Y, à côté de l'unité à table pivotante rotative (14), étant disposé un dispositif de serrage de pièce en forme d'unité à table fixe (17),
l'unité à table pivotante rotative (14) étant orientée avec son axe de pivotement dans la direction X et présentant une table rotative (15) et une articulation pivotante portant la table rotative (15), et
un usinage pouvant être effectué au moyen de la tête d'usinage (10) du chariot mobile (9) équipée d'un outil sur une pièce serrée dans la région de positionnement de pièce (7),
**caractérisé en ce que**
l'unité à table pivotante rotative (14) présente seulement une articulation pivotante (16) portant la table rotative (15), cette articulation pivotante (16) étant disposée du côté opposé à l'unité à table fixe (17) et
la surface de serrage de la table rotative (15) de l'unité à table pivotante rotative (14) dans la position horizontale de la table rotative (15) et la surface de serrage de l'unité à table fixe (17) sont situées essentiellement dans un plan.

2. Centre d'usinage selon la revendication 1, **caractérisé en ce que** l'unité à table fixe (17) présente sur sa surface de serrage des rainures (18) s'étendant dans la direction X, dans lesquelles rainures peuvent être déplacés des dispositifs de serrage pour une pièce.

3. Centre d'usinage selon la revendication 1 ou 2, **caractérisé en ce que** l'unité à table pivotante rotative (14) est supportée de manière pivotante en regard de l'articulation pivotante de support (16) dans un petit palier de support (19), lequel palier ne dépasse pas dans la direction Z ou ne dépasse que légèrement au-delà de la surface de serrage de l'unité à table fixe (17).

4. Centre d'usinage selon la revendication 3, **caractérisé en ce que** le petit palier de support (19) de l'unité à table pivotante rotative (14) est disposé sur le bord de l'unité à table fixe (17) tourné vers l'unité à table pivotante rotative (14).

5. Centre d'usinage selon l'une quelconque des revendications 1 à 4, **caractérisé en ce que** le chariot mobile (9) présente un magasin d'outil entraîné pour la tête d'usinage (10).
